# FASCICULE DE BREVET EUROPEEN

(11) **EP 3 705 338 B1**
(45) Date de publication et mention de la délivrance du brevet: **01.05.2024**
(21) Numéro de dépôt: 20161237.1
(22) Date de dépôt: 05.03.2020
(51) Int. Cl.: B60L 1/00, B60L 1/02, B60L 9/00, B61C 3/00, B61C 3/02

(54) **VÉHICULE FERROVIAIRE ÉQUIPÉ D'UN ORGANE DE STOCKAGE ÉLECTRIQUE**
SCHIENENFAHRZEUG, DAS MIT EINEM STROMSPEICHERORGAN AUSGESTATTET IST
RAILWAY VEHICLE PROVIDED WITH AN ELECTRIC STORAGE MEMBER

(30) Priorité: 06.03.2019 FR 1902289
(43) Date de publication de la demande: 09.09.2020
(73) Titulaire: SpeedInnov, 75008 Paris (FR)
(72) Inventeur: BOLLENGIER, Christophe, 68780 SENTHEIM (FR); HICKENBICK, Fabrice, 68500 MERXHEIM (FR); GOERES, David, 72000 LE MANS (FR); LAVIGNE, Philippe, 37270 VERETZ (FR)
(74) Mandataire: Lavoix

(56) Documents cités:
- EP-A1- 2 570 292
- EP-A1- 3 269 581
- CN-A- 109 383 299
- US-A1- 2017 237 372

## Description

La présente invention concerne un véhicule ferroviaire, du type comportant un dispositif d'alimentation électrique, un moteur électrique de traction, des premiers équipements électriques auxiliaires et un élément de connexion à une source de puissance électrique externe au véhicule, ledit dispositif d'alimentation comprenant : un convertisseur électrique apte à alimenter le moteur électrique de traction en courant haute tension ; ledit convertisseur électrique étant relié à l'élément de connexion ; un premier réseau électrique moyenne tension auquel les premiers équipements électriques auxiliaires sont reliés ; et un premier organe de stockage électrique, relié au premier réseau électrique moyenne tension, de sorte à fournir ou prélever de l'électricité audit premier réseau.

Il est connu d'équiper les véhicules ferroviaires, en particulier les trains, d'organes internes de stockage électrique. Un véhicule tel que décrit ci-dessus est par exemple décrit dans le document WO2014008114 ou dans le document EP3269581. Les équipements auxiliaires peuvent ainsi être alimentés par lesdits organes internes ou par la source externe, séparément ou simultanément.

Les fonctions auxiliaires telles que la climatisation des voitures passagers, nécessitent des puissances électriques importantes. Leur alimentation par des organes de stockage interne implique des contraintes et des coûts élevés pour le dispositif d'alimentation électrique du véhicule.

La présente invention a pour but de résoudre ce problème. A cet effet, l'invention a pour objet un véhicule ferroviaire du type précité, conforme aux caractéristiques de la revendication 1.

Suivant d'autres aspects avantageux de l'invention, le véhicule ferroviaire comporte l'une ou plusieurs des caractéristiques suivantes, prises isolément ou suivant toutes les combinaisons techniquement possibles :
- le dispositif d'alimentation électrique comprend un premier chargeur réversible, interposé entre le premier organe de stockage électrique et le premier réseau électrique moyenne tension, ledit premier chargeur étant apte à transférer de l'électricité de l'un à l'autre desdits premier organe et premier réseau ;
- le premier organe de stockage électrique comporte au moins une batterie Lithium-Ion ;
- le véhicule ferroviaire comprend en outre des deuxièmes équipements électriques auxiliaires, et dans lequel le dispositif d'alimentation électrique comprend en outre : un deuxième réseau électrique basse tension auquel lesdits deuxièmes équipements sont reliés ; et un deuxième organe de stockage électrique, relié au deuxième réseau électrique basse tension, de sorte à fournir de l'électricité audit deuxième réseau ; ledit deuxième organe de stockage étant en outre relié au premier réseau électrique moyenne tension de sorte à prélever de l'électricité audit premier réseau ;

- le dispositif d'alimentation électrique comprend un deuxième chargeur interposé entre le premier réseau électrique moyenne tension et le deuxième organe de stockage de sorte à fournir audit deuxième organe de l'électricité dudit premier réseau, ledit deuxième chargeur étant en outre relié au deuxième réseau électrique basse tension de sorte à fournir de l'électricité audit deuxième réseau sans passer par ledit deuxième organe de stockage ;
- le deuxième organe de stockage électrique comporte au moins une batterie Lithium-Ion.

L'invention se rapporte en outre à un procédé fonctionnement d'un véhicule ferroviaire tel que décrit ci-dessus.

Selon un premier aspect de l'invention, le procédé est tel que : le convertisseur électrique prélève de l'électricité à une source de puissance électrique externe au véhicule, par l'intermédiaire de l'élément de connexion, et fournit de l'électricité au premier réseau électrique moyenne tension ; et le premier organe de stockage électrique prélève de l'électricité audit premier réseau.

Selon un deuxième aspect de l'invention, le procédé est tel que : le convertisseur électrique prélève de l'électricité à une source de puissance électrique externe au véhicule, par l'intermédiaire de l'élément de connexion, et fournit de l'électricité au moteur électrique de traction ; et le premier organe de stockage électrique fournit de l'électricité au premier réseau électrique moyenne tension.

Selon un troisième aspect de l'invention, le procédé est tel que : le premier organe de stockage électrique fournit de l'électricité au premier réseau électrique moyenne tension ; et le deuxième organe de stockage électrique prélève de l'électricité audit premier réseau.

L'invention sera mieux comprise à la lecture de la description qui va suivre, donnée uniquement à titre d'exemple non limitatif et faite en se référant aux dessins sur lesquels :
- [Fig 1] la figure 1 est une vue schématique d'un véhicule ferroviaire selon un mode de réalisation de l'invention ; et
- [Fig 2] la figure 2 est une vue schématique d'éléments du véhicule ferroviaire de la figure 1.

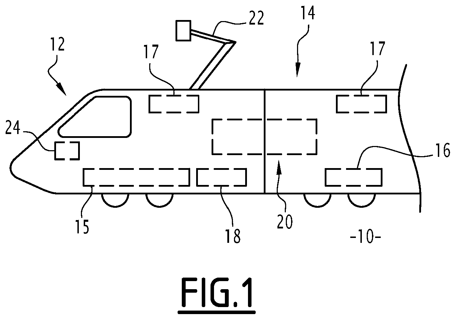

La figure 1 représente schématiquement un véhicule ferroviaire 10 selon un mode de réalisation de l'invention. Le véhicule ferroviaire 10, par exemple de type train, comporte une motrice 12 assemblée à une ou plusieurs voitures 14, notamment destinées à recevoir des passagers.

Le véhicule ferroviaire 10 comporte au moins un moteur électrique de traction 15, équipant la motrice 12. Le moteur 15 est notamment destiné à fonctionner sous haute tension, notamment supérieure à 700V.

Le véhicule ferroviaire 10 comporte en outre des premiers équipements électriques auxiliaires 16, 17 destinés à fonctionner sur un réseau moyenne tension, de type 400V. Les premiers équipements électriques auxiliaires comprennent par exemple un ou plusieurs compresseurs 16 destinés au gonflage d'un circuit pneumatique du véhicule 10, des dispositifs 17 de climatisation des voitures 14 ou encore un équipement thermique de type chambre froide destiné à conserver des denrées alimentaires.

Le véhicule ferroviaire 10 comporte en outre des deuxièmes équipements électriques auxiliaires 18 destinés à fonctionner sur un réseau basse tension, de type 110V. Les deuxièmes équipements électriques auxiliaires 18 comprennent par exemple des dispositifs d'éclairage et/ou de ventilation des voitures 14, ou encore des réfrigérateurs.

Le véhicule ferroviaire 10 comporte en outre un dispositif 20 d'alimentation électrique, relié aux équipements électriques auxiliaires 16, 17, 18. Le dispositif 20 est apte à coopérer avec une source de puissance électrique externe au véhicule. Dans le mode de réalisation représenté, le véhicule ferroviaire 10 comporte un pantographe 22 apte à fournir au dispositif 20 de l'électricité provenant d'une caténaire (non représentée).

Le véhicule ferroviaire 10 comporte en outre un module électronique de commande 24, apte à contrôler le dispositif 20.

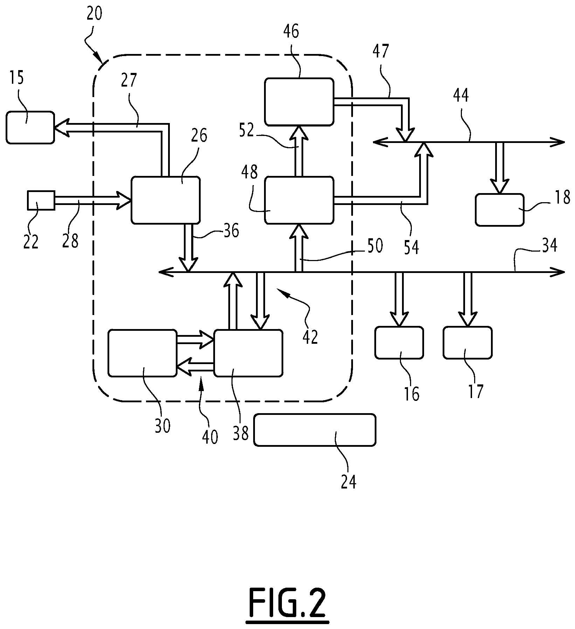

La figure 2 représente schématiquement plusieurs éléments du véhicule ferroviaire 10, en particulier le dispositif 20 d'alimentation électrique.

Ledit dispositif 20 comporte notamment un convertisseur électrique 26, de type onduleur, dont une première entrée 28 est reliée au pantographe 22. Par une première sortie 27, le convertisseur 26 est apte à alimenter le moteur 15 en courant haute tension, notamment supérieure à 700V.

Le dispositif 20 comporte en outre un premier organe de stockage électrique 30. Préférentiellement, ledit premier organe 30 est de type batterie et comprend plus préférentiellement au moins une batterie de technologie Lithium-Ion. Préférentiellement, ledit premier organe 30 présente une capacité importante, de l'ordre de 200 kWh.

Les batteries Lithium-Ion permettent en effet d'atteindre des capacités importantes pour des volumes restreints. De plus, elles présentent une meilleure durée de vie que d'autres technologies de type Nickel-Cadmium ou gel plomb.

Préférentiellement, l'organe 30 est destiné à stocker l'énergie des consommateurs de type non sécuritaire et confort tels qu'un équipement de climatisation.

Le dispositif 20 comporte en outre un premier réseau électrique 34 à moyenne tension, auquel les premiers équipements électriques auxiliaires 16, 17 sont reliés. Au moyen d'une deuxième sortie 36, le convertisseur électrique 26 est apte à alimenter ledit premier réseau 34 en courant moyenne tension.

Le dispositif 20 comporte en outre un premier chargeur réversible 38. Une première 40 et une seconde 42 liaisons réversibles relient électriquement ledit premier chargeur 38, respectivement au premier organe de stockage 30 et au premier réseau 34. Le premier chargeur 38 est ainsi apte à transférer de l'électricité de manière réversible entre ledit premier organe de stockage 30 et ledit premier réseau 34.

Le dispositif 20 comporte en outre un deuxième réseau électrique 44 à basse tension, auquel les deuxièmes équipements électriques auxiliaires 18 sont reliés.

Le dispositif 20 comporte en outre un deuxième organe de stockage électrique 46, comprenant une sortie 47 reliée audit deuxième réseau électrique 44 de sorte à fournir de l'électricité audit réseau. Préférentiellement, ledit deuxième organe 46 est de type batterie et comprend plus préférentiellement au moins une batterie Lithium-Ion.

Préférentiellement, l'organe 46 est destiné à stocker l'énergie des consommateurs de type sécuritaires, de type éclairage de secours et/ou radio, éventuellement requis par un référentiel réglementaire.

Le dispositif 20 comporte en outre un deuxième chargeur 48. Une entrée 50 dudit deuxième chargeur 48 est reliée au premier réseau électrique moyenne tension 34. Une première 52 et une seconde 54 sorties dudit deuxième chargeur 48 sont reliées respectivement au deuxième organe de stockage électrique 46 et au deuxième réseau électrique 44 basse tension.

Le module électronique de commande 24, par exemple disposé dans une cabine de pilotage de la motrice 12, est électroniquement relié à au moins une partie des éléments susmentionnés du dispositif 20 comme il apparaîtra ci-après. De préférence, le module électronique 24 est connecté à un réseau de type bord-sol GSM, qui lui permet de recevoir des informations actualisées sur le tarif de l'électricité disponible *via* la caténaire.

Des procédés de fonctionnement du véhicule ferroviaire 10 vont maintenant être décrits. Le module électronique de commande 24 est notamment équipé de programmes aptes à mettre en oeuvre ces procédés.

On considère tout d'abord un **premier procédé,** dit de fonctionnement nominal. Ledit procédé est notamment mis en oeuvre lorsque les informations reçues par le module électronique 24 font état d'un coût inférieur à un seuil prédéterminé, pour l'électricité disponible *via* la caténaire.

Selon ledit premier procédé, le convertisseur électrique 26 est alimenté par la caténaire, *via* le pantographe 22 et la première entrée 28. Le convertisseur électrique 26 alimente le premier réseau électrique moyenne tension 34 et les premiers équipements électriques auxiliaires 16, 17. Ledit premier réseau 34 alimente en outre le deuxième réseau électrique 44 basse tension, *via* le deuxième chargeur 48 et sa seconde sortie 54.

En outre, tant que le premier 30 et/ou le deuxième 46 organes de stockage électrique ne sont pas entièrement chargés, les première 40 et seconde 42 liaisons réversibles du premier chargeur 38 et/ou la première sortie 52 du deuxième chargeur 48 sont configurées de sorte à fournir de l'électricité dudit premier réseau 34 audit premier 30 et/ou audit deuxième 46 organes.

On considère un **deuxième procédé,** dit de fonctionnement de secours en climatisation. Ce deuxième procédé est notamment mis en oeuvre lorsque le véhicule 10 est immobilisé sur un tronçon de voie ferrée non équipé de caténaire ou immobilisé suite à un défaut de caténaire, en particulier dans un environnement chaud et ensoleillé.

Selon ledit deuxième procédé, le chargeur réversible 38 est alimenté *via* la liaison 40, par le premier organe de stockage électrique 30. Le chargeur électrique 38 alimente le premier réseau électrique moyenne tension 34 et les premiers équipements électriques auxiliaires 16, 17, notamment les dispositifs 17 de climatisation des voitures 14.

En effet, la fourniture d'électricité pour la climatisation nécessite une puissance importante, qu'est capable de fournir le chargeur réversible 38.

Par ailleurs, selon le deuxième procédé susmentionné, le deuxième réseau électrique 44 est alimenté par le deuxième organe de stockage 46. Eventuellement, selon les besoins, ledit deuxième réseau 44 est également partiellement alimenté par le premier réseau 34, *via* le deuxième chargeur 48 et sa seconde sortie 54.

On considère un **troisième procédé,** dit de lissage énergétique. Ledit troisième procédé est notamment mis en oeuvre lorsque les informations reçues par le module électronique 24 font état d'un coût de l'électricité du réseau en tarif « heure de pointe », *via* la caténaire.

Selon ledit troisième procédé, le convertisseur électrique 26 est alimenté par la caténaire, *via* le pantographe 22, et alimente par exemple le moteur 15. En outre, les première 40 et seconde 42 liaisons réversibles du premier chargeur 38 sont configurées de sorte que ledit premier organe 30 fournisse de l'électricité au premier réseau électrique moyenne tension 34 et les premiers équipements électriques auxiliaires 16, 17. Ainsi, l'électricité prélevée par le pantographe 22 est affectée prioritairement au moteur 15 afin de diminuer la consommation externe du véhicule 10.

De préférence, le module électronique 24 gère la sortie 36 du convertisseur 26 de sorte que le premier réseau 34 prélève l'électricité en priorité sur le premier organe 30 et, en cas de besoin, de manière non prioritaire sur ledit convertisseur 26.

Ledit premier réseau 34 alimente en outre le deuxième réseau électrique 44 basse tension, *via* le deuxième chargeur 48 et sa seconde sortie 54.

L'organe 30 est ensuite rechargé lorsque le tarif de l'électricité est en dehors des plages « heures pleines).

On considère un **quatrième procédé,** dit de recharge de batterie sécuritaire (organe 46) en dehors des zones de recharge. Ce quatrième procédé est notamment mis en oeuvre lorsque le véhicule 10 est en stationnement, notamment sur un site non équipé de caténaire.

Selon ledit quatrième procédé, le moteur 15 est à l'arrêt et le convertisseur électrique 26 n'est pas alimenté. Les première 40 et seconde 42 liaisons réversibles du premier chargeur 38 sont configurées de sorte que ledit premier organe 30 fournisse de l'électricité au premier réseau électrique moyenne tension 34.

Selon une première variante du quatrième procédé, tant que le deuxième organe de stockage électrique 46 n'est pas entièrement chargé, la première sortie 52 du deuxième chargeur 48 est configurée de sorte à fournir de l'électricité dudit premier réseau 34 audit deuxième organe 46. Ce procédé évite d'équiper ledit deuxième organe 46 d'une borne de recharge spécifique au stationnement.

Selon une deuxième variante du quatrième procédé, le premier réseau 34 alimente certains des premiers équipements électriques auxiliaires 16, 17, par exemple une chambre froide recevant des denrées alimentaires. Eventuellement, *via* le deuxième chargeur 48, le premier réseau 34 alimente également le deuxième réseau 44 et certains des deuxièmes équipements électriques auxiliaires 18, par exemple des réfrigérateurs. Ce procédé permet de conserver des aliments périssables dans le véhicule 10 en stationnement, notamment dans certains pays n'autorisant pas de laisser l'organe 22 connecté la nuit.

Les premier à quatrième procédés décrits ci-dessus peuvent être mis en oeuvre successivement par un même véhicule.

Ainsi, le véhicule ferroviaire selon l'invention présente une meilleure autonomie dans les cas où aucune source d'alimentation électrique externe n'est disponible. Le véhicule ferroviaire permet également de diminuer les coûts de fonctionnement, en stockant de l'électricité et en la restituant selon l'évolution en temps réel des tarifs.

## Revendications

1. Véhicule ferroviaire (10) comprenant un dispositif d'alimentation électrique (20), un moteur électrique de traction (15), des premiers équipements électriques auxiliaires (16, 17) et un élément (22) de connexion à une source de puissance électrique externe au véhicule, ledit dispositif d'alimentation comprenant :
- un convertisseur électrique (26) relié à l'élément de connexion (22) ;
- un premier réseau électrique moyenne tension (34) auquel les premiers équipements électriques auxiliaires sont reliés ; et
- un premier organe de stockage électrique (30), relié (40, 38, 42) au premier réseau électrique moyenne tension, de sorte à fournir ou prélever de l'électricité audit premier réseau ;
le convertisseur électrique (26) comprenant une première sortie (36) reliée au premier réseau électrique moyenne tension, de sorte à fournir du courant moyenne tension audit premier réseau ;
le véhicule ferroviaire comprenant en outre des deuxièmes équipements électriques auxiliaires (18), et
le dispositif d'alimentation électrique comprenant en outre :
- un deuxième réseau électrique basse tension (44) auquel lesdits deuxièmes équipements sont reliés ; et
- un deuxième organe de stockage électrique (46), relié (47) au deuxième réseau électrique basse tension, de sorte à fournir de l'électricité audit deuxième réseau ;
ledit deuxième organe de stockage étant en outre relié (50, 48, 52) au premier réseau électrique moyenne tension (34) de sorte à prélever de l'électricité audit premier réseau ;
le véhicule ferroviaire étant **caractérisé en ce que** :
- le convertisseur électrique comprend en outre une deuxième sortie (27) configurée pour alimenter le moteur électrique de traction en courant haute tension ; et
- le dispositif d'alimentation électrique comprend un premier chargeur (38) réversible, interposé entre le premier organe de stockage électrique (30) et le premier réseau électrique moyenne tension (34), ledit premier chargeur étant apte à transférer de l'électricité de l'un à l'autre desdits premier organe et premier réseau.

2. Véhicule ferroviaire selon la revendication 1, dans lequel le premier organe de stockage électrique (30) comporte au moins une batterie Lithium-Ion.

3. Véhicule ferroviaire selon la revendication 1 ou 2, dans lequel le dispositif d'alimentation électrique comprend un deuxième chargeur (48) interposé entre le premier réseau électrique moyenne tension (34) et le deuxième organe de stockage (46), de sorte à fournir audit deuxième organe de l'électricité dudit premier réseau, ledit deuxième chargeur étant en outre relié (54) au deuxième réseau électrique basse tension (44) de sorte à fournir de l'électricité audit deuxième réseau sans passer par ledit deuxième organe de stockage.

4. Véhicule ferroviaire selon l'une des revendications précédentes, dans lequel le deuxième organe de stockage électrique (46) comporte au moins une batterie Lithium-Ion.

5. Procédé de fonctionnement d'un véhicule ferroviaire selon l'une des revendications précédentes, dans lequel :
- le convertisseur électrique (26) prélève de l'électricité à une source de puissance électrique externe au véhicule, par l'intermédiaire de l'élément de connexion (22), et fournit du courant moyenne tension au premier réseau électrique moyenne tension (34) ; et
- le premier organe de stockage électrique (30) prélève de l'électricité audit premier réseau.

6. Procédé de fonctionnement d'un véhicule ferroviaire selon l'une des revendications 1 à 4, dans lequel :
- le convertisseur électrique (26) prélève de l'électricité à une source de puissance électrique externe au véhicule, par l'intermédiaire de l'élément de connexion (22), et fournit du courant haute tension au moteur électrique de traction (15) ; et
- le premier organe de stockage électrique (30) fournit de l'électricité au premier réseau électrique moyenne tension (34).

7. Procédé de fonctionnement d'un véhicule ferroviaire selon l'une des revendications 1 à 4, dans lequel :
- le premier organe de stockage électrique (30) fournit de l'électricité au premier réseau électrique moyenne tension (34) ; et
- le deuxième organe de stockage électrique (46) prélève de l'électricité audit premier réseau.

## Patentansprüche

1. Schienenfahrzeug (10) mit einer Stromversorgungsvorrichtung (20), einem elektrischen Fahrmotor (15), ersten elektrischen Hilfsausrüstungen (16, 17) und einem Verbindungselement (22) mit einer elektrischen Stromquelle außerhalb des Fahrzeugs, wobei die Stromversorgungsvorrichtung umfasst:
- einen elektrischen Wandler (26), der mit dem Verbindungselement (22) verbunden ist;
- ein erstes elektrisches Mittelspannungsnetz (34), an das die ersten elektrischen Hilfsausrüstungen angeschlossen sind; und
- ein erstes elektrisches Speicherorgan (30), das mit dem ersten elektrischen Mittelspannungsnetz verbunden (40, 38, 42) ist, um dem ersten Netz Elektrizität zuzuführen oder zu entnehmen;
der elektrische Wandler (26) einen ersten Ausgang (36) aufweist, der mit dem ersten elektrischen Mittelspannungsnetz verbunden ist, um dem ersten Netz Mittelspannungsstrom zuzuführen;
das Schienenfahrzeug außerdem zweite elektrische Hilfsausrüstungen (18) umfasst, und
die Stromversorgungsvorrichtung ferner umfasst:
- ein zweites Niederspannungsnetz (44), an das die zweiten Ausrüstungen angeschlossen sind; und
- ein zweites elektrisches Speicherorgan (46), das mit dem zweiten Niederspannungsnetz verbunden (47) ist, um dem zweiten Netz Elektrizität zuzuführen;
wobei das zweite Speicherorgan außerdem mit dem ersten elektrischen Mittelspannungsnetz (34) verbunden ist (50, 48, 52), um Elektrizität aus dem ersten Netz zu entnehmen;
wobei das Schienenfahrzeug **dadurch gekennzeichnet ist, dass**:
- der elektrische Wandler ferner einen zweiten Ausgang (27) umfasst, der so konfiguriert ist, dass er den elektrischen Fahrmotor mit Hochspannungsstrom versorgt; und
- die Stromversorgungsvorrichtung ein erstes umkehrbares Ladegerät (38) umfasst, das zwischen dem ersten elektrischen Speicherorgan (30) und dem ersten elektrischen Mittelspannungsnetz (34) angeordnet ist, wobei das erste Ladegerät dazu geeignet ist, Elektrizität von einem der ersten Organe und dem ersten Netz auf das andere zu übertragen.

2. Schienenfahrzeug nach Anspruch 1, bei dem das erste elektrische Speicherorgan (30) mindestens eine Lithium-Ionen-Batterie umfasst.

3. Schienenfahrzeug nach Anspruch 1 oder 2, bei dem die Stromversorgungsvorrichtung eine zweites Ladegerät (48) umfasst, das zwischen dem ersten elektrischen Mittelspannungsnetz (34) und dem zweiten Speicherorgan (46) angeordnet ist, um das zweite Speicherorgan mit Elektrizität aus dem ersten Netz zu versorgen, wobei das zweite Ladegerät außerdem mit dem zweiten Niederspannungsnetz (44) verbunden (54) ist, um dem zweiten Netz Elektrizität zuzuführen, ohne das zweite Speicherorgan zu durchlaufen.

4. Schienenfahrzeug nach einem der vorhergehenden Ansprüche, bei dem das zweite elektrische Speicherorgan (46) mindestens eine Lithium-Ionen-Batterie umfasst.

5. Funktionsverfahren eines Schienenfahrzeugs nach einem der vorstehenden Ansprüche, wobei:
- der elektrische Wandler (26) über das Verbindungselement (22) Elektrizität von einer elektrischen Stromquelle außerhalb des Fahrzeugs abzieht und Mittelspannungsstrom an das erste elektrische Mittelspannungsnetz (34) liefert; und
- das erste elektrische Speicherorgan (30) Elektrizität aus dem ersten Netz entnimmt.

6. Funktionsverfahren eines Schienenfahrzeugs nach einem der Ansprüche 1 bis 4, wobei:
- der elektrische Wandler (26) über das Verbindungselement (22) Elektrizität von einer elektrischen Stromquelle außerhalb des Fahrzeugs abzieht und Hochspannungsstrom an den elektrischen Fahrmotor (15) liefert; und
- das erste elektrische Speicherorgan (30) Elektrizität an das erste elektrische Mittelspannungsnetz (34) liefert.

7. Funktionsverfahren eines Schienenfahrzeugs nach einem der Ansprüche 1 bis 4, wobei:
- das erste elektrische Speicherorgan (30) Elektrizität an das erste elektrische Mittelspannungsnetz (34) liefert; und
- das zweite elektrische Speicherorgan (46) Elektrizität aus dem ersten Netz entnimmt.

## Claims

1. Railway vehicle (10) comprising a power supply device (20), an electrical traction engine (15), first electrical auxiliary equipment (16, 17), and a connector (22) for connecting to an electrical power source external to the vehicle, wherein the power supply device comprises:
- an electrical converter (26) connected to the connector (22);
- a first medium-voltage electricity network (34) to which the first auxiliary electrical equipment is connected,
- a first electrical storage element (30) connected (40, 38, 42) to the first medium-voltage electricity network so as to supply electricity to or draw electricity from the first network;
the electrical converter comprising a first output (36) connected to the first medium-voltage electricity network so as to supply the first network with medium-voltage current;
the vehicle further comprising second auxiliary electrical equipment (18), and the power supply device further comprises:
- a second low-voltage electricity network (44) to which the second equipment is connected; and
- a second electrical storage element (46) connected (47) to the second low-voltage electricity network so as to supply electricity to or draw electricity from the second network;
the second storage element being also connected (50, 48, 52) to the first medium-voltage electricity network (34) so as to draw electricity from the first network ;
the railway vehicle being **characterized in that** :
- the electrical converter also comprises a second output (27) configured for supplying the electrical traction engine with high-voltage current; and
- the power supply device comprises a first reversible charger (38), interposed between the first electrical storage element (30) and the first medium-voltage electricity network (34), wherein the first charger is suited to transfer electricity to one or the other of the first element and the first network.

2. Railway vehicle according to claim 1, wherein the first electricity storage element (30) comprises at least one lithium ion battery.

3. Railway vehicle according to claim 1 or 2, wherein the power supply device comprises a second charger (48) interposed between the first medium-voltage electricity network (34) and the second storage element (46) so as to supply the second element with electricity from the first network, wherein the second charger is also connected (54) to the second low-voltage electricity network (44) so as to supply the second network with electricity without passing through the second storage element.

4. Railway vehicle according to one of the previous claims, wherein the second electricity storage element comprises at least one lithium ion battery.

5. Method for the operation of a railway vehicle according to one of the previous claims, wherein:
- the electrical converter (26) draws electricity from an electrical power source external to the vehicle via the connector (22), and supplies the first medium-voltage electricity network with medium-voltage current, and
- the first electrical storage element (30) draws electricity from the first network.

6. Method for the operation of a railway vehicle according to one of claims 1 to 4, wherein:
- the electrical converter (26) draws electricity from an electrical power source external to the vehicle via the connector (22), and supplies the electrical traction engine with high-voltage current, and
- the first electrical storage element (30) supplies the first medium-voltage electricity network (34) with electricity.

7. Method for the operation of a railway vehicle according to one of claims 1 to 4, wherein:
- the first electrical storage element (30) supplies the first medium-voltage electricity network (34) with electricity; and
- the second electrical storage element (46) draws electricity from the first network.
